# EUROPEAN PATENT SPECIFICATION

(11) **EP 0 610 840 B1**
(45) Date of publication and mention of the grant of the patent: **07.05.1997**
(21) Application number: 94101791.5
(22) Date of filing: 07.02.1994
(51) Int. Cl.: A23G 3/26

(54) **A method and a device for coating articles with a loose coating material**
Verfahren und Vorrichtung zum Überziehen von Produkten mittels loser Materialien
Procédé et appareil d'enrobage de produits au moyen de matériaux pulvérulents

(30) Priority: 12.02.1993 CH 466/93
(43) Date of publication of application: 17.08.1994
(73) Proprietor: SOREMARTEC S.A., 6700 Arlon-Schoppach (BE); Ferrero S.p.A., I-12051 Alba (Cuneo) (IT); FERRERO OFFENE HANDELSGESELLSCHAFT m.b.H., D-60599 Frankfurt (DE)
(72) Inventor: Bertalero, Roberto, I-15011 Acqui Terme (Alessandria) (IT)
(74) Representative: Bosotti, Luciano

(56) References cited:
- GB-A- 972 904
- US-A- 2 970 563
- US-A- 3 381 658

## Description

The present invention relates to a method and to a device for coating articles with a loose coating material which is intended to adhere to the surfaces of the articles.

The invention has been developed with particular attention to its possible use in the food sector, for example, for applying a coating of granular, edible material to a product constituted by a spherical wafer casing containing a creamy filling, possibly covered with chocolate or other alimentary creams. In this type of use, the loose material may be constituted by a granular material such as, for example, chopped hazelnuts or almonds, grated coconut, sugar crystals, etc.

The solutions currently used in the art for the automatic application of such a coating are derived from two basic courses of action, that is:
- solutions in which the products to be coated are introduced into a container containing the loose coating material, and
- solutions in which the coating material is dropped or thrown towards the products to be coated, which advance on a conveyor line.

Exemplary of the first kind of solutions are the arrangements disclosed, e.g., in GB-A-972 904, US-A-2 970 563 or US-A-3 381 658, this last-cited document being the one after which the preambles of Claims 1 and 10 were patterned.

In both cases, the coating usually takes place in several successive stages with intermediate rotation of the products to cause the coating to extend as homogeneously as possible over the entire surface of the products.

The adhesion of the coating material is usually achieved by virtue of the fact that the product to be coated is covered by a layer of material (for example, a so-called coating of chocolate or another edible cream) which is kept in a softened state during the application of the granular coating. After the application of the coating, the material sets (usually as a result of cooling) and thus keeps the particles of the granular coating fixed to the surface of the product coated.

In practice, various problems arise with the use of the solutions of the prior art.

In the first place, it may quite easily be found that the particles of the coating are held on the coated product inadequately; although the particles of the loose coating material adhere to the coated product initially, they tend to separate therefrom upon the slightest stress, for example, when the product is removed from the coating station. This leads, on the one hand, to an adverse effect on the appearance of the finished product (the product is coated insufficiently and/or unevenly in some parts) and, on the other hand, to the soiling of the product-handling lines by fragments of coating which have become detached from the product.

In the second place, the solutions according to the prior art cannot operate satisfactorily when the coating material is itself a generally delicate material, for example, a granular mass of fragments of so-called meringue (a product produced by the setting of an aerated, edible mass based on egg white and food flavourings). This occurs particularly when it is attempted to make the coating material adhere more firmly to the product in some way by a handling operation; in other words, when they are pressed, even extremely lightly, materials such as granules of meringue tend to crumble, giving rise to the adverse effects mentioned above, particularly as regards the soiling of the product-processing lines.

The object of the present invention is to provide a solution which can solve the problems mentioned above.

According to the present invention, this object is achieved by virtue of a method having the further characteristics recited in Claim 1.

A further subject of the invention is a device having the characteristics recited in Claim 10.

The invention will now be described, purely by way of non-limiting example, with reference to the appended drawings, in which:
Figure 1 is a general perspective view of a device formed according to the invention,
Figure 2 is a schematic view, on an enlarged scale, showing, in greater detail, the operating principle of the portion of the device indicated by the arrow II in Figure 1,
Figure 3 is a plan view of the device according to the invention, observed along the arrow III of Figure I, and
Figures 4 to 6 are theoretical views sectioned on the life IV-IV of Figure 2, showing, in even greater detail, the general operating principle of the device according to the invention.

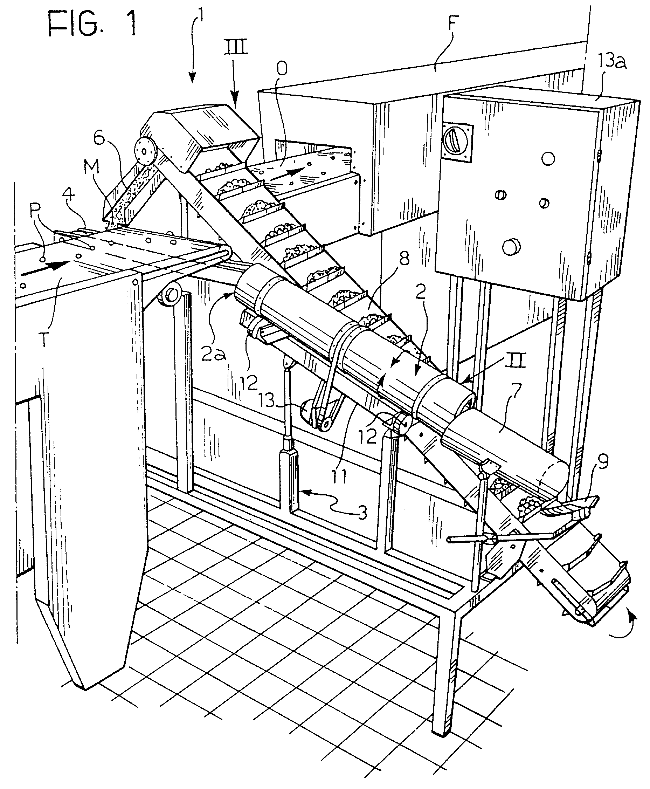

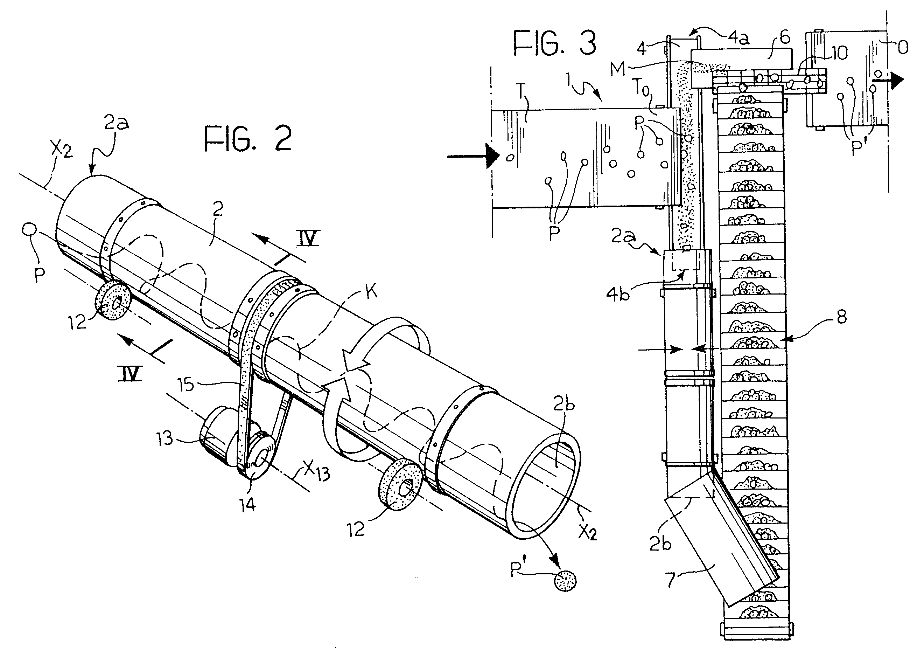

In Figures 1 and 3, a device which can be used for automatically applying a coating of loose material, typically constituted by an edible, granular material, to articles constituted, for example, by food products P, is generally indicated 1.

The products P may be constituted, for example, by products comprising spherical wafer casings with creamy and pasty fillings covered by a thin layer of chocolate or of a similar alimentary cream. A granular food product such as, for example, chopped hazelnuts or almonds, grated coconut, a mixture of meringue fragments, etc. is to be applied to the products as a coating material.

The food products P flow towards the device 1 on an upstream conveyor T constituted, for example, by a motor-driven belt conveyor of a type widely known in the art in systems for the automatic packaging of food products.

For an understanding of the invention, it suffices to record that the conveyor T supplies the device 1 with a flow of products P which advances generally from left to right with reference to the viewpoints of Figures 1 to 3.

An output conveyor, indicated O, and structurally similar to the input conveyor T, on the other hand, is intended to pick up the coated products at the output of the device 1 and then to advance them into a cooling tunnel F (also of known type) . The adhesion of the loose coating material applied in the device 1 to the products P becomes firmer within the tunnel F. This result is usually achieved as a result of the cooling effect of the tunnel F: the products P are in fact supplied to the device 1 from a coating (covering) station in which a layer of an alimentary mass (chocolate cream, etc.) which is soft and creamy when the products P enter the device 1, is applied to the products P. The loose coating material therefore adheres to the alimentary mass which sets upon cooling in the tunnel F, anchoring the mass of coating firmly to the product P. This takes place according to general principles well-known in the art which do not therefore need to be recited herein and which, moreover, are not relevant for the purposes of an understanding of the invention.

The main element of the device 1 is constituted by a tubular duct 2 which is supported on the framework 3 of the device 1 so as to be generally inclined to the horizontal.

In practice, in the arrangement in which it is mounted in the device 1, the duct 2 is generally inclined at an angle of the order of about 15° to the horizontal so as to have an upper input opening 2a and a lower output or discharge opening 2b which is located in a generally lower position than the input opening 2a.

A conveyor, indicated 4, typically a motor-driven belt conveyor (of known type and structurally similar to the conveyors T and O, except for its smaller size), is disposed immediately below the output end To of the conveyor T.

As can best be seen in Figures 1 and 3, the upper pass of the conveyor 4 (which is constituted, as stated, by a motor-driven belt conveyor) extends with its direction of transportation perpendicular to the general direction of advance of the products P on the conveyor T, below the output end To. The conveyor 4 can therefore receive, on its conveyor pass, the products P which fall from the input conveyor T at the output end thereof.

The upper conveyor pass of the conveyor 4 extends horizontally between an input end 4a and an output end 4b, the terms "input" and "output" naturally referring to the direction of advance of the products P which fall onto the conveyor 4; from the viewpoints of Figures 1 and 3, this direction of advance is from left to right (Figure 1) and from top to bottom (Figure 3), respectively.

Both of the ends 4a and 4b of the conveyor 4 project slightly relative to the sides of the conveyor T. In particular, the output end 4b of the conveyor 4 projects into the input end 2a of the duct 2. The products P which fall onto the conveyor pass of the conveyor 4 from the conveyor T are thus urged by the conveyor 4 into the duct 2. The latter constitutes a kind of chute along and within which the products P supplied to the input end 2a can fall until they emerge from the lower output end 2b.

As will be explained further below, the downward movement of the products P within the duct 2 is not a true rolling fall. In fact, a carpet of loose coating material is fed onto the upstream end 4a of the conveyor 4 from a channel-shaped duct 6 (which is supplied according to criteria which will become clearer from the following); this is in fact the granular material used for coating the products P.

This granular material forms, on the upper conveyor pass of the conveyor 4, a carpet of a certain thickness (for example, of the order of 0.5-1 cm) onto which the products P discharged from the output end To of the conveyor T fall. The granular material in question also falls into the duct 2 and, within the duct, forms a carpet M of loose granular material which, as it gradually slides towards the output end 2b, covers the lower portion of the cavity of the duct 2 according to criteria which will be described further below. It will suffice to note here that, because of the presence of the bed of granular material M on the lower portion of the duct 2, the products P do not roll/slide rapidly along the duct 2 but, on the contrary, perform a more regular downward movement.

At the output end 2b of the duct 2 the products, indicated P', which are already coated (in the manner which will be described below) with granular material, fall into a further tubular duct 7 which is mounted in a fixed position relative to the framework 3. The duct is intended to deposit the products P on the lower end of a bucket or shovel conveyor 8 which is mounted on the framework 3 in a position beside the duct 2 and also at an inclination corresponding approximately to the inclination of the duct 2. The deposition of the products P' on the conveyor 8 is usually made more precise and secure by the positioning of a deflector or channel 9 at the output of the duct 7. When the products P' have passed through both the duct 2 and the fixed duct 7, they are thus in the lower portion of the framework 3 at the lower end of the shovel or bucket conveyor 8. As a result of the general upward movement of the upper active pass of the conveyor 8, the coated products P' are returned to the upper portion of the device 1, near the input end of the output conveyor O.

The conveyor 8 is also of generally known type and is comparable to the bucket or shovel conveyors currently used, for example, for transporting loose materials such as sand, coal or even granular food products.

The coated products P' which emerge from the conveyor 7 fall onto the shovels of the conveyor 8 together with some of the bed of granular material M. The speed of operation of the device 1 is regulated - in dependence on the size of the device 1 - in coordination with the speed of operation of the conveyors T and O (number of products P per unit of time), in a manner such that two or three coated products P' fall onto each shovel of the conveyor 8.

At the upper end of the shovel conveyor 8, the products P' fall onto a duct or inclined plane 10 having a generally perforated or grid-like structure. The duct or plane 10 is situated (see Figures 1 and 3 in combination) immediately beneath the upper output end of the shovel conveyor 8 and immediately above the channel-shaped duct 6. The products P' which are discharged from the conveyor 8 are thus retained on the duct or plane 10 and transferred thereby, usually by gravity, towards the output conveyor O.

The granular material discharged from the conveyor 8 together with the products P', however, passes through the holes in the duct or plane 10 and falls onto the channel-shaped duct 6 so as to be transferred once more to the input end 4a of the conveyor 4 in a general recycling arrangement.

Naturally, it is useful periodically or continuously to replenish the mass of the bed of granular material M in the channel-shaped duct 6. This is to take account of the fact that a certain fraction of the granular material adheres to the products P as a coating layer and is therefore removed from the device 1.

This replenishment may be effected either by a periodic intervention by an operator or, possibly, by the provision of an automatically- or semiautomatically-operated hopper (not shown) above the channel-shaped duct 6 (or near the upstream end of the conveyor 4).

The main characteristic of the device according to the invention is that the duct 2 is not kept in a fixed position relative to the framework 3 but, on the contrary, can perform a general oscillatory rotational movement (back and forth) about its principal longitudinal axis X2 (see Figure 2).

This is usually achieved (see Figure 1 in particular) by mounting the duct 2 on a cradle 11 which is supported at the envisaged angle of inclination on the framework 3, and by providing, at the two ends of the cradle, pairs of rollers 12 on which the outer surface of the duct 2 bears in a rolling arrangement.

The duct 2 is rotated, for example, by a motor 13 (such as an electric motor) disposed on the framework, with a pulley 14 mounted on its output shaft, which is oriented along an axis X13, parallel to the axis X2. A belt 15 extends around this pulley and also around the duct 2.

By bringing about an oscillatory rotational movement of the motor 15 it is thus possible to impart to the duct 2 a general rotational movement back and forth about the axis X2.

The amplitude and frequency of this oscillatory movement can be adjusted by means of the control device 13a of the motor 13 (Figure 1); naturally this is a control device of known type, the criteria for the production and operation of which are well-known to experts in the art, and do not therefore require a detailed description herein.

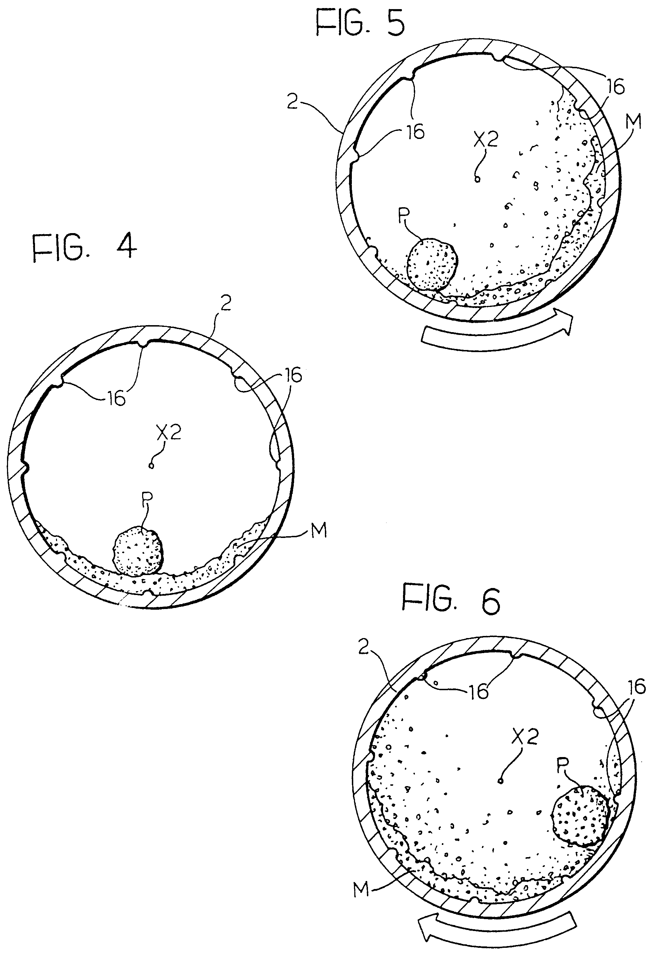

Preferably, (see also the sections of Figures 4 to 6), the duct 2 is constituted simply by a portion of tube of a material such as a plastics material suitable for contact with food products, for example, a crystalline PVC or polyethylene tube, etc.

The duct 2 is preferably formed in a manner such that it has transparent windows or - even better - is formed wholly of a transparent material, to enable continuous inspection of the coating of the products P which takes place within the duct 2.

Again with reference to Figures 4 to 6, it can be seen that longitudinal ribs 16 are preferably provided along the internal surface of the duct 2 and may extend along the generatrices of the duct 2 (which is cylindrical) or along helical paths, or may be of a different shape.

In order to describe the operating principle of the device according to the invention, reference may usefully be made to the sequence of drawings 4 to 6.

It is assumed, for example, that a product P is supplied to the inlet opening 2a of the duct 2 in the central position of Figure 4, that is, with the product P situated instantaneously in a central and symmetrical position relative to the generally arcuate, channel-shaped profile X which the bed of coating material M adopts within the duct 2 (also as a result of the continuous oscillatory movement described below). As it descends within the duct (Figure 5), the product P is exposed to the general oscillatory movement of the duct 2 back and forth about the axis X2 which causes the product P both to roll sideways relative to the channel formed by the bed M (thus moving from the central region towards the side edges thereof), and to be exposed to the effect of thrown granular material; because of the oscillatory movement of the duct 2, the material of the bed M in fact tends to be lifted and moved away from the walls of the duct 2 (particularly in the instantaneously uppermost region of the bed) in order to fall on the product P like rain.

The oscillatory nature of the movement (see Figures 5 and 6 in particular), together with the fact that the downward movement of each product P along the duct 2 takes place within a time interval comprising several cycles of oscillations back and forth about the axis X2, causes the product P to follow a zig-zag path such as that schematically indicated K in Figure 2, within the duct 2. Various loops or bends can thus be distinguished in the downward path of the products P along the duct 2. These loops or bends correspond to the fact that, during its descent, each product P rolls along the bed M generally transversely and tangentially of the duct 2 (the terms transverse and tangential should naturally be interpreted with reference to the theoretical section planes of the duct 2 perpendicular to the axis X2). This sideways rolling movement is generally greatly predominant relative to the rolling movement which is generally very small and takes place along the generatrices of the duct 2; in effect, it may be said that, rather than rolling along the duct 2, the product P is entrained by the bed M of granular material which descends gradually along the duct.

Thus, and also because of the presence of the ribs 16, the bed of granular material M tends, in general, to retain its position within the duct, as can be seen from a comparison of Figures 4 to 6. Naturally, as already stated, this general position-retention effect does not exclude a portion of the bed M, which may even be quite a considerable portion, being detached from the walls of the duct 2 and being thrown onto the product P, completing the coating thereof.

Moreover, in order to throw the coating material onto the products P more effectively, it has been found advantageous to bring about the oscillatory movement of the duct 2 (and hence the movement of the motor 13) fairly abruptly so that the duct 2 reaches the limit positions of its oscillatory movement in the two senses, that is, the positions at which the sense of rotation is changed, at a fairly fast speed. Owing to the immediate stoppage of the movement, this encourages the material M to be thrown away from the wall of the duct 2 towards the products P by inertia.

Tests carried out by the Applicant have shown that, by using a duct 2 which has an axial length of the order of 60 cm, and a diameter of about 10 cm, and which is kept inclined at an angle of the order of 15° to the horizontal, and by operating the motor 13 in a manner such as to impart to the duct 2 a rotational movement back and forth with an amplitude of about 90°, at a frequency of 100 oscillations/minute, it is possible to make the products P descend within a time interval of the order of about 3 - 4 seconds so that each product P is subjected to 100 cycles of the reversal of the movement of the duct 2 during its descent within the duct 2.

In these conditions, it has been found that the bed M extends through an angle of the order of 120° within the duct 2, relative to the principal axis X2. With reference to products with diameters of about 20 mm covered by an alimentary cream, the invention enables a firm and compact coating to be formed without appreciable detachment of the granular material M on the output conveyor O, with a coating material M constituted by granules. In particular, the granular component included in the coating of the product has always been found, upon visual inspection, to be intact without appreciable damage by compression.

## Claims

1. A method of coating articles (P) with a loose coating material (M) which is intended to adhere to the surfaces of the articles (P) comprising the steps of:
- feeding (4, 6) the loose material (M) into a duct (2) having a principal axis
- feeding (T, 4) the articles (P) to be coated into the duct (2), and
- bringing about a rotational movement of the duct (2) about the principal axis (X2)
characterized in that:
- the loose material (M) is fed into the duct (2) so as to form a bed of the loose material (M) in the duct (2),
- the articles (P) are disposed on the bed of loose material (M) whereby said rotational movement causes a rolling movement of the articles (P) on the bed (M) of loose material and the loose material of the bed (M) is thrown onto the articles (P), and in that the rotational movement is a back and forth movement.

2. A method according to Claim 1, characterized in that it comprises the step of keeping the duct (2) generally inclined with an input end (2a) and an output end (2b) of the duct disposed in upper and lower positions relative to each other, respectively, so that, during the rotational movement of the duct (2) about the principal axis (X2), the articles (P) also perform a forward movement in the duct (2) from the input end (2a) towards the output end (2b).

3. A method according to one of Claims 1 or 2, characterized in that it comprises the step of regulating the quantity of the loose material (M) in the bed in a manner such that, in use, the bed (M) extends over an angular portion of the duct (2) of the order of 120° with reference to the principal longitudinal axis (X2).

4. A method according to Claim 2 and Claim 3, characterized in that the back and forth angular movement has an amplitude of about 90°.

5. A method according to Claim 1 or Claim 4, characterized in that the back and forth movement is brought about at a frequency of the order of 100 cycles/minute.

6. A method according to any one of Claims 1 to 5 characterized in that the duct (2) is produced in the form of a tubular duct.

7. A method according to any one of Claims 1 to 6, characterized in that it comprises the step of providing longitudinal ribs (16) on the internal wall of the duct (2) for achieving a certain entrainment effect on the material of the bed (M) during the rotational movement.

8. A method according to any one of Claims 1 to 7, characterized in that it comprises the step of forming the duct (2) with at least partially transparent walls.

9. A method according to any one of Claims 1 to 8, characterized in that it also comprises the steps of:
- picking up the articles (P') coated with the loose material and the material of the bed (M) at the output (2b) of the duct (2),
- subjecting the articles (P') and the material of the bed (M) to a screening action (10) so as to separate the coated articles (P') from the material of the bed (M) in order to return the material into the duct (2).

10. A device for coating articles (P) with a loose coating material (M) which is intended to adhere to the surfaces of the articles (P), comprising:
- a duct (2) having a principal axis (X2) and defining a path (K) of advance of the articles (P),
- supply means (4, 6) for feeding the loose material (M) into the duct (2),
- further supply means (T, 4) for feeding the articles (P) to be coated into the duct (2), and
- motor means (13, 14) acting on the duct in order to bring about a rotational movement of the duct (2) about the principal axis (X2)
characterized in that:
- said supply means (4, 6) are arranged in order to feed, in use, the loose material into the duct (2) so as to form a bed of the loose material (M) in the duct (2),
- said further supply means (T, 4) feed the articles on the bed of loose material (M) and
- the motor means (13, 14) impart in use a back and forth rotational movement to the duct (2) so as to bring about a rolling movement of the articles (P) on the bed (M) of loose material, and to throw the loose material of the bed (M) onto the articles (P).

11. A device according to Claim 10, characterized in that it comprises a support structure (3, 11, 12) for keeping the duct (2) generally inclined with an input end (2a), associated with the further supply means (T, 4), and an output end (2b) of the duct, which are disposed in upper and lower positions relative to each other, respectively, so that, during the rotational movement of the duct (2) brought about by the motor means (13, 14), the articles (P) also perform a forward movement in the duct (2) from the input end (2a) towards the output end (2b).

12. A device according to Claim 10, characterized in that the motor means (13, 14) are arranged in order to impart to the duct (2) an oscillatory angular movement having an amplitude of about 90°.

13. A device according to Claim 10 or Claim 12, characterized in that the motor means (13, 14) bring about the back and forth rotational movement of the duct (2) at a frequency of the order of 100 cycles/minute.

14. A device according to any one of Claims 10 to 13, characterized in that the duct (2) is tubular.

15. A device according to any one of Claims 10 to 14, characterized in that the internal wall of the duct (2) has longitudinal ribs (16) for achieving a certain entrainment effect on the material of the bed (M) during the rotational movement.

16. A device according to any one of Claims 10 to 15, characterized in that the duct (2) has at least partially transparent walls.

17. A device according to any one of Claims 10 to 16, characterized in that it also comprises:
- conveyor means (7, 8, 9) associated with the output (2b) of the duct (2) for picking up the articles (P') coated with the loose material and the material (M) of the bed,
- screening means (10) associated with the conveyor means (8) for receiving the coated articles (P') and the material of the bed (M) and separating the coated articles (P') from the material of the bed (M), and
- recycling means (6) for returning the material of the bed (M), from which the coated articles (P') are separated, from the screening means (10) to the supply means (4).

## Patentansprüche

1. Verfahren zum Umhüllen von Produkten (P) mit einem losen Umhüllungsmaterial (M), das zum Anhaften an den Oberflächen der Produkte (P) gedacht ist, umfassend die Schritte:
Zuführen (4,6) des losen Materials (M) in eine Leitung (2), die eine Hauptachse (X2) besitzt,
Zuführen (T, 4) der zu umhüllenden Produkte (P) in die Leitung (2), und
in Drehbewegung versetzen der Leitung (2) um die Hauptachse (X2)
dadurch **gekennzeichnet,** daß
das lose Material (M) in die Leitung (2) eingeführt wird, um so ein Bett aus losen Material (M) in der Leitung (2) zu bilden,
die Produkte (P) auf dem Bett aus losen Material (M) angeordnet werden, wodurch die Drehbewegung eine rollende Bewegung der Produkte (P) auf dem Bett (M) aus losem Material bewirkt und das lose Material des Betts (M) auf die Produkte (P) geworfen ist, indem daß die Drehbewegung eine Hin- und Her-Bewegung ist.

2. Verfahren nach Anspruch 1, dadurch gekennzeichnet, daß es den Schritt des im wesentlichen geneigten Haltens der Leitung (2) umfaßt, mit einer Eingangsseite (2a) und einer Ausgangsseite (2b) der Leitung, die in einer oberen bzw. unteren Position relativ zueinander angeordnet sind, so daß während der Drehbewegung der Leitung (2) um die Hauptachse (X2) die Produkte (P) ebenso eine Vorwärtsbewegung in der Leitung (2) von der Eingangsseite (2a) zu der Ausgangsseite (2b) ausführen.

3. Verfahren nach irgendeinem der Ansprüche 1 oder 2, dadurch gekennzeichnet, daß es den Schritt des Regulierens der Menge des losen Materials (M) in dem Bett umfaßt, in solch einer Weise, daß bei Benutzung das Bett (M) sich über einen Winkelabschnitt der Leitung (2) im Bereich von 120° bezüglich der Hauptlängsachse (X2) erstreckt.

4. Verfahren nach Anspruch 2 und 3, dadurch gekennzeichnet, daß die Hin- und Her-Winkelbewegung eine Amplitude von ungefähr 90° besitzt.

5. Verfahren nach Anspruch 1 oder 4, dadurch gekennzeichnet, daß die Hin- und Herbewegung mit einer Frequenz im Bereich von 100 Zyklen/pro Minute durchgeführt wird.

6. Verfahren nach irgendeinem der Ansprüche 1 bis 5, dadurch gekennzeichnet, daß die Leitung (2) in der Form einer röhrenförmigen Leitung ausgebildet ist.

7. Verfahren nach irgendeinem der Ansprüche 1 bis 6, dadurch gekennzeichnet, daß es den Schritt umfaßt des Anordnens von längsgerichteten Rippen (16) auf der Innenwand der Leitung (2) zur Erziehung eines bestimmten Mitreißeffekts auf das Material des Betts (M) während der Drehbewegung.

8. Verfahren nach irgendeinem der Ansprüche 1 bis 7, dadurch gekennzeichnet, daß es den Schritt des Bildens der Leitung (2) mit zumindest teilweisen transparenten Wänden umfaßt.

9. Verfahren nach irgendeinem der Ansprüche 1 bis 8, dadurch gekennzeichnet, daß es ebenso die Schritte umfaßt:
Aufnehmen der mit dem losen Material umhüllten Produkte (P') und des Materials des Betts (M) an dem Ausgang (2b) der Leitung (2),
Unterwerfen der Produkte (P') und des Materials des Betts(M) einer Siebung (10) um so die umhüllten Produkte (P') von dem Material des Betts (M) zu trennen, um so das Material in die Leitung (2) zurückzuführen.

10. Vorrichtung zum Umhüllen von Produkten (P) mit einem losen Umhüllungsmaterial (M), das zum Anhaften an den Oberflächen der Produkte (P) gedacht ist, umfassend:
eine Leitung (2), die eine Hauptachse (X2) aufweist und einen Fortbewegungspfad (K) der Produkte (P) definiert,
zumindest ein Zuführungsmittel (4, 6) zum Zuführen des losen Materials (M) in die Leitung (2),
zumindest ein weitere Zuführungsmittel (T4) zum Zuführen der zu umhüllenden Produkte (P) in die Leitung (2) und
zumindest ein Motormittel (13, 14), das auf die Leitung einwirkt, um eine Drehbewegung der Leitung (2) um die Hauptachse (X2) zu bewirken,
dadurch **gekennzeichnet,** daß
das Zuführungsmittel (4, 6) angeordnet ist, um beim Gebrauch das lose Material in die Leitung (2) so zuzuführen, daß sich ein Bett aus losem Material (M) in der Leitung (2) ausbildet,
das weitere Zuführungsmittel (T, 4) die Produkte auf das Bett aus losem Material (M) zuführt, und
das Motormittel (13,14) bei Benutzung eine Hin- und Her-Drehbewegung auf die Leitung (2) bewirkt. um so eine Rollbewegung der Produkte (P) auf dem Bett (M) des losen Materials herbeizuführen, und um das lose Material des Betts (M) auf die Produkte (P) zu werfen.

11. Vorrichtung nach Anspruch 10, dadurch gekennzeichnet, daß sie eine Tragkonstruktion (3, 11, 12) umfaßt, zum Halten der Leitung (2), im wesentlichen geneigt mit einer Eingangsseite (2a), die mit den weiteren Zuführungsmitteln (T, 4) zusammenwirkt und einer Ausgangsseite (2b) der Leitung, die in oberen und unteren Positionen relativ zu einander angeordnet sind, so daß während der Drehbewegung der Leitung (2), die durch das Motormittel (13, 14) aufgebracht wird, die Produkte (P) ebenso eine Vorwärtsbewegung in der Leitung (2) von der Eingangsseite (2a) zu der Ausgangsseite (2b) ausführen.

12. Vorrichtung nach Anspruch 10, dadurch gekennzeichnet, daß die Motormittel (13,14) angeordnet sind, um der Leitung (2) eine oszillatorische Winkelbewegung die eine Amplitude von ungefähr 90° besitzt, zu erteilen.

13. Vorrichtung nach Anspruch 10 oder 12, dadurch gekennzeichnet, daß die Motormittel (13,14) die Hin- und Her-Drehbewegung der Leitung (2) mit einer Frequenz im Bereich von 100 Zyklen / Minute aufbringen.

14. Vorrichtung nach irgendeinem der Ansprüche 10 bis 13, dadurch gekennzeichnet, daß die Leitung (2) röhrenförmig ist.

15. Vorrichtung nach irgendeinem der Ansprüche 10 bis 14, dadurch gekennzeichnet, daß die Innenwand der Leitung (2) Längsrippen (16) zur Erzielung eines bestimmten Mitreißeffekts auf das Material des Betts (M) während der Drehbewegung aufweist.

16. Vorrichtung nach irgendeinem der Ansprüche 10 bis 15, dadurch gekennzeichnet, daß die Leitung (2) zumindest teilweise transparente Wände besitzt.

17. Vorrichtung nach irgendeinem der Ansprüche 10 bis 16, dadurch gekennzeichnet, daß sie ebenso umfaßt:
mit dem Ausgang (2b) der Leitung (2) in Verbindung stehende Förderer (7, 8, 9) zum Aufnehmen der mit dem losen Material umhüllten Produkte (P') und des Materials (M) des Betts,
mit den Förderern (8)in Verbindung stehendes Siebmittel (10) zum Aufnehmen und der umhüllten Produkte (P') und des Materials des Betts(M) und zum Trennen der umhüllten Produkte (P') von dem Material des Betts (M) und Recyclingsmittel (6) zum Zurückführen des Materials des Betts (M), von dem die umhüllten Produkte (P') getrennt sind, von dem Siebmittel (10) zu den Zuführungsmitteln (4).

## Revendications

1. Procédé d'enrobage de produits (P) au moyen d'un matériau de revêtement libre (M) qui a pour but d'adhérer aux surfaces des produits (P) comportant les étapes :
- d'alimentation (4, 6) du matériau libre (M) dans un conduit (2) ayant un axe principal (X2),
- d'alimentation (T, 4) des produits (P) à enrober dans le conduit (2), et
- d'entraînement d'un mouvement de rotation du conduit (2) autour de l'axe principal (X2)
caractérisé en ce que :
- le matériau libre (M) est alimenté dans le conduit (2) afin de former un lit de matériau libre (M) dans le conduit (2),
- les produits (P) sont disposés sur le lit de matériau libre (M), de sorte que ledit mouvement de rotation provoque un mouvement de roulement des produits (P) sur le lit (M) de matériau libre, et matériau libre du lit (M) est projecté sur les produits (P), et en ce que le mouvement de rotation est un mouvement de va-et-vient.

2. Procédé selon la revendication 1, caractérisé en ce qu'il comporte l'étape de conservation du conduit (2) généralement incliné avec une extrémité d'entrée (2a) et une extrémité de sortie (2b) du conduit respectivement disposées en positions supérieure et inférieure l'une par rapport à l'autre afin que, pendant le mouvement de rotation du conduit (2) autour de l'axe principal (X2), les produits (P) effectuent également un mouvement en avant dans le conduit (2) de l'extrémité d'entrée (2a) vers l'extrémité de sortie (2b).

3. Procédé selon l'une des revendications 1 ou 2, caractérisé en ce qu'il comporte l'étape de régulation de la quantité de matériau libre (M) dans le lit de telle manière que, lors de l'utilisation, le lit (M) s'étend jusqu'à une portion angulaire du conduit (2) de l'ordre de 120° par rapport à l'axe longitudinal principal (X2).

4. Procédé selon la revendication 2 et la revendication 3, caractérisé en ce que le mouvement angulaire de va-et-vient a une amplitude d'environ 90°.

5. Procédé selon la revendication 1 ou la revendication 4, caractérisé en ce que le mouvement de va-et-vient est effectué à une fréquence de l'ordre de 100 cycles/minute.

6. Procédé selon l'une quelconque des revendications 1 à 5, caractérisé en ce que le conduit (2) est fabriqué sous forme de conduit tubulaire.

7. Procédé selon l'une quelconque des revendications 1 à 6, caractérisé en ce qu'il comporte l'étape de garnissage de nervures longitudinales (16) sur la paroi interne du conduit (2) pour réaliser un certain effet d'entraînement sur le matériau du lit (M) pendant le mouvement de rotation.

8. Procédé selon l'une quelconque des revendications 1 à 7, caractérisé en ce qu'il comporte l'étape de formation du conduit (2) avec des parois au moins partiellement transparentes.

9. Procédé selon l'une quelconque des revendications 1 à 8, caractérisé en ce qu'il comporte également les étapes :
- de récupération des produits (P') enrobés de matériau libre et du matériau du lit (M) à la sortie (2b) du conduit (2),
- de soumission des produits (P') et du matériau du lit (M) à une action de triage (10) pour séparer les produits enrobés (P') du matériau du lit (M) afin de renvoyer le matériau dans le conduit (2).

10. Dispositif d'enrobage de produits (P) au moyen d'un matériau de revêtement libre (M) qui a pour but d'adhérer aux surfaces des produits (P), comportant :
- un conduit (2) ayant un axe principal (X2) et définissant une course (K) en avant des produits (P),
- un moyen d'amenée (4, 6) pour alimenter le matériau libre (M) dans le conduit (2),
- un moyen d'amenée supplémentaire (T, 4) pour alimenter les produits (P) à enrober dans le conduit (2), et
- un moyen moteur (13, 14) agissant sur le conduit afin d'entraîner un mouvement de rotation du conduit (2) autour de l'axe principal (X2)
caractérisé en ce que :
- ledit moyen d'amenée (4, 6) est installé afin d'alimenter, au cours de l'utilisation, le matériau libre dans le conduit (2) pour former un lit de matériau libre (M) dans le conduit (2),
- ledit moyen d'amenée supplémentaire (T, 4) alimente les produits sur le lit de matériau libre (M) et
- le moyen moteur (13, 14) transmet au cours de l'utilisation, un mouvement de rotation de long en large au conduit (2) afin d'entraîner un mouvement de roulement des produits (P) sur le lit (M) de matériau libre, et de projeter le matériau libre du lit (M) sur les produits (P).

11. Dispositif selon la revendication 10, caractérisé en ce qu'il comporte une structure support (3, 11, 12) pour conserver le conduit (2) généralement incliné avec une extrémité d'entrée (2a), associée au moyen d'amenée supplémentaire (T, 4), et une extrémité de sortie (2b) du conduit, qui sont respectivement disposées en positions supérieure et inférieure l'une par rapport à l'autre afin que, pendant le mouvement de rotation du conduit (2) entraîné par le moyen moteur (13, 14), les produits (P) effectuent également un mouvement en avant dans le conduit (2) de l'extrémité d'entrée (2a) vers l'extrémité de sortie (2b).

12. Dispositif selon la revendication 10, caractérisé en ce que le moyen moteur (13, 14) est installé afin de transmettre au conduit (2) un mouvement oscillatoire angulaire ayant une amplitude d'environ 90°.

13. Dispositif selon la revendication 10 ou la revendication 12, caractérisé en ce que le moyen moteur (13, 14) entraîne le mouvement de rotation de va-et-vient du conduit (2) à une fréquence de l'ordre de 100 cycles/minute.

14. Dispositif selon l'une quelconque des revendications 10 à 13, caractérisé en ce que le conduit (2) est tubulaire.

15. Dispositif selon l'une quelconque des revendications 10 à 14, caractérisé en ce que la paroi interne du conduit (2) a des nervures longitudinales (16) pour réaliser un certain effet d'entraînement sur le matériau du lit (M) pendant le mouvement de rotation.

16. Dispositif selon l'une quelconque des revendications 10 à 15, caractérisé en ce que le conduit (2) a des parois au moins partiellement transparentes.

17. Dispositif selon l'une quelconque des revendications 10 à 16, caractérisé en ce qu'il comporte également :
- un moyen d'acheminement (7, 8, 9) associé à la sortie (2b) du conduit (2) pour récupérer les produits (P') enrobés de matériau libre et le matériau (M) du lit,
- un moyen de triage (10) associé au moyen d'acheminement (8) pour recevoir les produits enrobés (P') et le matériau du lit (M) et séparer les produits enrobés (P') du matériau du lit (M), et
- un moyen de recyclage (6) pour renvoyer le matériau du lit (M), séparé des produits enrobés (P'), du moyen de triage (10) vers le moyen d'amenée (4).
